# FASCICULE DE BREVET EUROPEEN

(11) **EP 4 323 260 B1**
(45) Date de publication et mention de la délivrance du brevet: **29.04.2026**
(21) Numéro de dépôt: 22713975.5
(22) Date de dépôt: 10.03.2022
(51) Int. Cl.: B62D 25/20, B60K 1/04

(54) **VÉHICULES DE TYPE HYBRIDE**
HYBRIDFAHRZEUGE
HYBRID VEHICLES

(30) Priorité: 15.04.2021 FR 2103900
(43) Date de publication de la demande: 21.02.2024
(73) Titulaire: Stellantis Auto SAS, 78300 Poissy (FR)
(72) Inventeur: FONFREDE, Stephane, 90000 BELFORT (FR); MINARD, Stephan, 25200 MONTBELIARD (FR); DUPONT, Laetitia, 25310 ROCHES LES BLAMONT (FR)
(74) Mandataire: BCIP
(86) Numéro de dépôt international: PCT/FR2022/050433
(87) Numéro de publication internationale: WO 2022/219258

(56) Documents cités:
- FR-A1- 3 077 055
- FR-A1- 3 093 984
- JP-A- 2000 238 541
- JP-A- 2015 074 406

## Description

La présente invention concerne le domaine des véhicules de type hybride, et en particulier leur structure de soubassement.

Les véhicules automobiles de type hybride comprennent un moteur thermique en plus d'un moteur électrique. Les deux moteurs fonctionnent simultanément ou alternativement de manière à réduire la puissance totale consommée par le véhicule. La batterie du moteur électrique est de forme généralement parallélépipédique. Dans le cas d'un véhicule hybride qui a une batterie permettant d'assister le moteur thermique, c'est-à-dire dans le cas d'une motorisation de type MHEV (en anglais « *Mild Hybrid Electric Vehicle* »), la batterie, de taille limitée, est implantée sous le plancher du véhicule, au niveau de l'assise des sièges avant, c'est-à-dire entre les traverses avant et arrière, et entre le tunnel et longeron d'une structure de soubassement.

La batterie peut être implantée soit au niveau de l'assise conducteur, soit au niveau de l'assise passager.

En cas de choc, notamment en cas de choc latéral de type « choc poteau », il est indispensable que la batterie soit protégée de manière à éviter un endommagement de la batterie et limiter les risques d'incendie. La structure de soubassement doit donc satisfaire à de nombreuses prestations notamment des tests de choc, car lors d'un choc latéral de type « choc poteau », une partie des efforts résultant du choc transite par cette structure de soubassement.

Il existe des tests pour mesurer la résistance d'un véhicule à un choc latéral de type « choc poteau ». Dans un test, un véhicule est monté sur une plateforme lancée à 32 km/h avec un angle de choc de 75° par rapport à la direction longitudinale du véhicule. Le véhicule est positionné de façon à ce qu'il percute un poteau au niveau d'un des sièges avant. La déformation de l'habitacle engendrant des risques importants de blessures, notamment au niveau du thorax ou de l'abdomen, le test vise à évaluer l'ampleur de la déformation du plancher.

Le document FR 3 095 633 décrit une traverse d'assise avant de véhicule automobile formée par pliage, profilage ou emboutissage à chaud à partir d'un flan de tôle et présentant une épaisseur variant de manière croissante suivant sa longueur entre son centre et ses deux extrémités. Lors d'un choc latéral de type « choc poteau », l'extrémité de la traverse d'assise située du côté du choc subit un effort maximal. Du fait de la différence de structure entre le centre et les extrémités de la traverse, la traverse est adaptée à encaisser l'énergie induite lors d'un choc latéral. Néanmoins, l'implantation de la batterie s'accompagne également de la modification du plancher.

Ainsi, le document FR 3 010 383 décrit un plancher de véhicule automobile comportant une peau inférieure et une peau supérieure fixées entre elles de façon à ménager dans au moins une partie du plancher un corps creux permettant d'installer un dispositif fonctionnel au sein du plancher, par exemple une batterie. A cet effet, le corps creux dispose d'une ouverture permettant le passage de ce dispositif fonctionnel et/ou d'un moyen de fixation d'un tel dispositif. Le corps creux est généralement situé le long d'un bord latéral du plancher, ce qui ne permet pas de protéger de manière optimale le dispositif fonctionnel cas de choc latéral de type « choc poteau ».

En outre, le document JP 2015 074406 A divulgue un véhicule automobile hybride selon le préambule de la revendication indépendante 1.

L'invention a pour objectif d'améliorer la situation antérieure. En particulier, l'invention cherche à améliorer les prestations en matière de sécurité et de protection d'une batterie de propulsion implantée sous un siège avant dans un véhicule automobile à motorisation hybride, c'est-à-dire avec une motorisation à la fois thermique et électrique.

A cet effet, et selon un premier aspect, l'invention a pour objet un véhicule automobile hybride comprenant une motorisation thermique et électrique, le véhicule comprenant des sièges avant et un plancher disposé sous les sièges avant, le plancher comprenant un tunnel central et étant relié au niveau de chacun de ses bords latéraux à un longeron ; le véhicule est remarquable en ce qu'il comprend au moins un corps creux s'étendant selon la direction transversale du véhicule entre un des longerons et le tunnel central sur une distance supérieure à 50% de la distance entre ledit longeron et le tunnel central ; ledit corps creux étant agencé sous un des sièges avant. Le corps creux ou au moins un corps creux comprend une paroi avant formant une planche à talon avant, et une paroi supérieure formant un plancher intermédiaire

Comme on l'aura compris à la lecture de la définition qui vient d'en être donnée, l'invention propose d'aménager un espace sous l'un des sièges avant, ce qui permet de conférer au véhicule un environnement potentiellement protecteur en cas de choc latéral de type « choc poteau » pour des éléments techniques, tels que par exemple une batterie de propulsion. Cet espace est défini par un corps creux en tôle, qui fait office d'enveloppe de protection.

En effet, le véhicule automobile hybride selon l'invention présente une structure de soubassement améliorée, dans laquelle une poche suffisamment grande (i.e. supérieur à la moitié de la distance entre le longeron et le tunnel central) a été créé pour permettre l'insertion de dispositif fonctionnel, telle que par exemple une batterie de propulsion, sans obliger celui-ci à se placer à proximité ou contre le longeron disposé au niveau du bord latéral du plancher. La poche est également suffisamment grande pour pouvoir recevoir d'autres éléments de protection du dispositif fonctionnel, tel que par exemple des moyens d'absorption d'énergie et/ou des moyens de renfort structurel qui peuvent s'avérer fort utile en cas de choc latéral de type « choc poteau ».

Par exemple, le corps creux ou au moins un corps creux s'étend selon la direction transversale du véhicule entre un des longerons et le tunnel central sur une distance égale ou supérieure à 60% de la distance entre ledit longeron et le tunnel central ; de préférence, égale ou supérieure à 80%. De préférence encore, le corps creux ou au moins un corps creux est relié à la fois au tunnel central et à un des longerons. Dans une telle configuration on comprend que le corps creux ou au moins un corps creux s'étend selon la direction transversale du véhicule entre un des longerons et le tunnel central sur 100% de la distance entre ledit longeron et le tunnel central.

Par exemple, au moins un corps creux est agencé sous le siège conducteur et/ou sous le siège passager avant ; de préférence, au moins un corps creux est agencé sous le siège conducteur.

Avantageusement, au moins un élément technique est logé dans le corps creux et l'élément technique ou au moins un des éléments techniques est une batterie de propulsion.

Avantageusement, le corps creux comprend deux parties, une première partie dans laquelle au moins un élément technique est logé, ledit élément technique ou au moins un des éléments techniques étant une batterie de propulsion, et une deuxième partie comprenant au moins une cloison interne verticale. De préférence, au moins une cloison interne verticale s'étend selon la direction longitudinale du véhicule.

Selon un mode de réalisation préféré, le corps creux ou au moins un corps creux comprend une paroi inférieure comprenant une pièce de support pour un élément technique disposé dans ledit corps creux. De préférence, la planche à talon avant et le plancher intermédiaire sont venus de matière de sorte à former une pièce unique.

De préférence, le corps creux ou au moins un corps creux comprend une paroi arrière. De préférence, la paroi arrière du corps creux est fixée par son bord inférieur au plancher du véhicule.

De préférence, le siège avant sous lequel est disposé le corps creux est fixé au plancher par une traverse d'assise arrière, le corps creux comprend une paroi arrière, et la paroi arrière du corps creux est disposée en avant de la traverse d'assise arrière selon la direction longitudinale du véhicule.

De préférence, le plancher intermédiaire et ladite paroi arrière sont venues de matière de sorte à former une pièce unique. Dans un mode de réalisation, la planche à talon avant, le plancher intermédiaire la paroi arrière du corps creux sont venus de matière de sorte à former une pièce unique.

Dans un mode de réalisation, le plancher, la planche à talon avant, le plancher intermédiaire la paroi arrière du corps creux sont venus de matière de sorte à former une pièce unique.

Avantageusement, au moins un support d'assise pour la fixation dudit siège avant est porté par ledit plancher intermédiaire et/ou au moins un support d'assise pour la fixation dudit siège avant est porté par la planche à talon. De préférence, au moins un support d'assise avant pour la fixation dudit siège avant est porté par ledit plancher intermédiaire et/ou au moins un support d'assise avant pour la fixation dudit siège avant est porté par la planche à talon.

Par exemple, le siège avant sous lequel est disposé le corps creux est fixé au plancher par une traverse d'assise arrière et le corps creux est disposé en avant de la traverse d'assise arrière selon la direction longitudinale du véhicule. Ainsi, le siège avant sous lequel est disposé le corps creux est fixé au plancher par une traverse d'assise arrière et par le corps creux, chacun portant deux supports d'assise. Cette configuration est avantageuse en ce qu'elle permet d'agrandir l'espace disponible sous le siège pour loger un élément technique tel qu'une batterie de propulsion et offre donc davantage de liberté concernant le choix des dimensions dudit élément technique. En effet, l'élément technique (ou la batterie) n'a plus besoin d'être dimensionnée pour pouvoir être logée entre les deux traverses d'assises avant et arrière puisque la traverse d'assise avant est supprimée. Le corps creux fait fonction de traverse d'assise avant et à ce titre porte au moins un et de préférence les deux supports d'assise avant.

Par exemple, le siège avant sous lequel est disposé le corps creux est fixé au plancher par une traverse d'assise arrière, ladite traverse d'assise arrière portant deux supports d'assise arrière, à savoir un support d'assise arrière intérieur agencé à proximité du tunnel central et un support d'assise arrière extérieur agencé à proximité du longeron; le corps creux portant deux supports d'assise avant, à savoir un support d'assise intérieur agencé à proximité du tunnel central et un support d'assise extérieur agencé à proximité du longeron. De préférence, une glissière de siège extérieure relie le support d'assise arrière extérieur au support d'assise avant extérieur et une glissière de siège intérieure relie le support d'assise arrière intérieur au support d'assise avant intérieur.

Avantageusement, le plancher intermédiaire montre deux zones alignées selon la direction transversale du véhicule, à savoir une première zone rigide agencée du côté du tunnel central et une deuxième zone déformable en compression agencée du côté du longeron et un élément technique est disposé dans le corps creux et agencé pour être placé sous la première zone du plancher intermédiaire. Cette configuration est particulièrement avantageuse parce qu'en étant disposée à proximité du tunnel, la batterie est éloignée du longeron ce qui limite le risque d'un endommagement de la batterie en cas de choc latéral. Mais cette configuration offre d'autres avantages puisque la deuxième partie du plancher intermédiaire, et par extension du corps creux, va absorber l'énergie du choc en se déformant. Cette deuxième partie à une fonction d'absorbeur de choc (en anglais « crash box ») disposé entre le longeron et la batterie. La première partie du plancher intermédiaire, et par extension du corps creux, est plus rigide et va transmettre les efforts de manière à protéger la batterie. L'invention est remarquable en ce qu'elle combine un placement optimisé de la batterie (c'est-à-dire écarté du longeron) avec des moyens d'absorption de choc agencés entre le longeron et la batterie.

De préférence, la première zone s'étend sur plus de 50 % de la longueur du plancher intermédiaire pris selon la direction transversale du véhicule, par exemple sur plus de 55% ou sur plus de 60% de la longueur.

Par exemple, la première zone du plancher intermédiaire comprend au moins une nervure de rigidification s'étendant selon la direction transversale du véhicule.

Par exemple, la deuxième zone du plancher intermédiaire comprend au moins une nervure de rigidification s'étendant selon la direction longitudinale du véhicule.

Avantageusement, la **planche à talon avant** montre deux zones alignées selon la direction transversale du véhicule, à savoir une première zone rigide agencée du côté du tunnel central et une deuxième zone déformable en compression agencée du côté du longeron, la première zone montrant une rigidité supérieure à la deuxième zone.

De préférence, la première zone s'étend sur plus de 50 % de la longueur de la planche à talon avant selon la direction transversale du véhicule, par exemple sur plus de 55% ou sur plus de 60% de la longueur.

Par exemple, le corps creux porte deux supports d'assise à savoir un support d'assise intérieur agencé à proximité du tunnel central et un support d'assise extérieur agencé à proximité du longeron, et la première zone de la planche à talon avant s'étend depuis le tunnel central jusqu'au niveau dudit support extérieur d'assise. Ainsi, à l'inverse, la deuxième zone de la planche à talon avant s'étend depuis le longeron jusqu'au niveau dudit support extérieur d'assise de sorte à rejoindre la première zone.

Par exemple, la première et la deuxième zone de la planche à talon avant sont constituées de matériaux différents et sont reliées entre elles par raboutage, soudage ou vissage. Alternativement, la première et la deuxième zone de la planche à talon sont par exemple venues de matière et constituées d'un même matériau, la différence de rigidité étant obtenue par une différence d'épaisseur, la première zone comprenant une épaisseur supérieure à la deuxième zone et/ou par la présence au moins un relief de rigidification sur la première zone et/ou au moins un ajour sur la deuxième zone.

Par exemple, le plancher comprend une ouverture disposée au niveau du corps creux et le corps creux comprend en outre une paroi inférieure. De préférence, ladite paroi inférieure comprend au moins deux pièces, à savoir une pièce de support pour un élément technique disposé dans ledit corps creux et une pièce de fermeture du plancher ; les deux pièces étant alignées selon la direction transversale du véhicule, la pièce de support étant agencée du côté du tunnel central et la pièce de fermeture du plancher étant agencée du côté du longeron. Par exemple, les deux pièces de la paroi inférieure sont disposées à des hauteurs différentes, la pièce de fermeture du plancher étant disposée à une hauteur supérieure à la hauteur de la pièce de support. Cette configuration est avantageuse en ce qu'elle offre plus de liberté concernant le dimensionnement de la batterie de propulsion. En effet, vu que la hauteur disponible au-dessus du plancher est limitée par la présence des supports d'assise portés par le plancher intermédiaire, l'invention offre la possibilité à la batterie de se placer en partie sous le plancher du véhicule. La pièce de fermeture du plancher n'étant pas sous la batterie, elle peut être placée à la même hauteur que le plancher du véhicule ce qui permet de ne pas modifier le reste de l'environnement sous plancher du véhicule. Par exemple, la pièce de fermeture du plancher est soudée au longeron. Par exemple, le véhicule comprend au moins un brancard sous plancher s'étendant parallèlement au longeron, la pièce de fermeture du plancher est soudée à un brancard sous plancher.

Par exemple, la pièce de support est une pièce en acier montrant un angle de pliage inférieur à 90 degrés sous une charge maximale, tel que mesuré suivant le test de flexion VDA238-100 avec une épaisseur de référence de 1,50 mm.

Par exemple, la pièce de fermeture du plancher une pièce en acier montrant un angle de pliage supérieur à 90 degrés sous une charge maximale, tel que mesuré suivant le test de flexion VDA238-100 avec une épaisseur de référence de 1,50 mm.

Par exemple, la pièce de support est fixée au tunnel central ; de préférence par vissage.

L'invention sera bien comprise et d'autres aspects et avantages apparaîtront clairement à la lecture de la description qui suit donnée en référence à la planche de dessins annexée sur laquelle :
[Fig. 1] La figure 1 est une vue en coupe de la structure de soubassement du véhicule automobile hybride selon l'invention. La vue est prise de l'avant du véhicule.
[Fig. 2] La figure 2 est une vue du dessus du plancher au niveau de l'assise d'un siège avant d'un véhicule automobile hybride selon l'invention.
[Fig. 3] La figure 3 est une vue du dessous du plancher au niveau de l'assise d'un siège avant d'un véhicule automobile hybride selon l'invention.
[Fig. 4] La figure 4 est une vue du dessus d'une pièce composée du plancher intermédiaire et de la planche à talon avant d'un véhicule automobile hybride selon l'invention.

Dans la suite de la description, le terme « comprendre » est synonyme de « inclure » et n'est pas limitatif en ce qu'il autorise la présence d'autres éléments dans le véhicule, le corps creux ou le procédé auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « intérieur » et « extérieur » s'entendront par rapport à un plan médian longitudinal du véhicule (s'étendant selon les directions verticale et longitudinale du véhicule), le terme « intérieur » indiquant une proximité avec ledit plan médian longitudinal plus importante selon la direction transversale du véhicule que le terme « extérieur ».

Les termes « longitudinal », « transversal », « avant » et « arrière » s'entendront par rapport à l'orientation générale du véhicule tel que pris selon son sens normal de marche.

Sur les différentes figures, les mêmes références désignent des éléments identiques ou similaires.

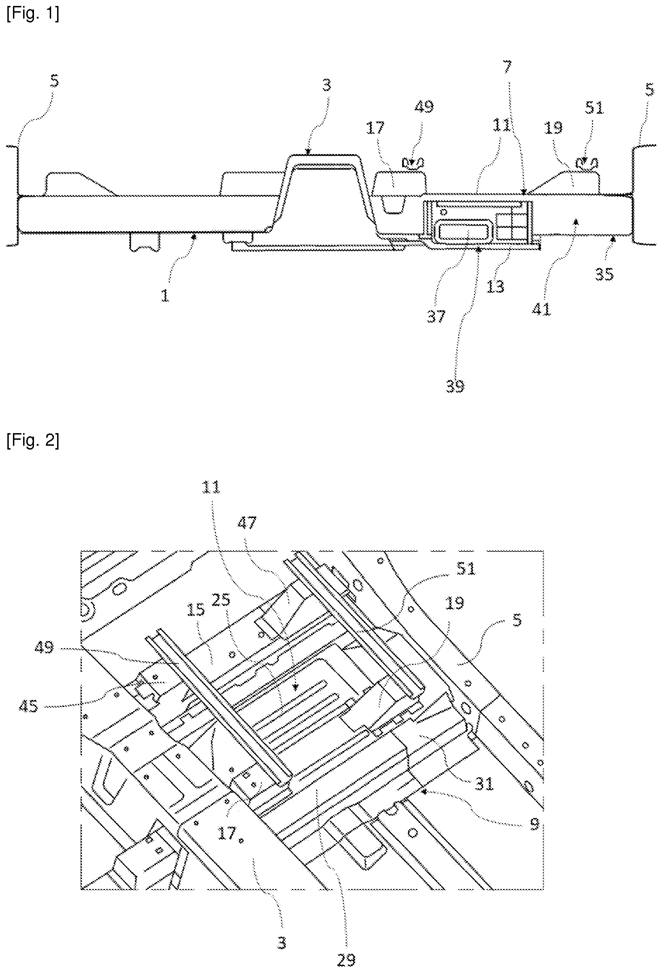

La description qui suit fait référence aux figures 1 à 4 simultanément.

L'implantation d'un élément technique, tel que par exemple une batterie 37 de propulsion, sous les assises d'un véhicule automobile hybride, nécessite un environnement protecteur, de sorte à ce que l'élément technique ne soit pas ou peu impacté lors d'un choc latéral de type « choc poteau ». Dans le cas où une batterie 37 de propulsion est implantée, cet environnement protecteur est même essentiel pour éviter tout risque d'incendie pouvant être causé par des dommages subis par la batterie lors d'un tel type de choc.

Ainsi, dans le cas d'un véhicule automobile hybride comprenant une motorisation thermique et électrique, le véhicule comprend des sièges avant et un plancher 1 disposé sous les sièges avant, le plancher 1 comprenant un tunnel 3 central et étant relié au niveau de chacun de ses bords latéraux à un longeron 5. L'invention crée cet environnement protecteur en faisant en sorte que le véhicule comprenne au moins un corps creux 7 s'étendant selon la direction transversale du véhicule entre un des longerons 5 et le tunnel 3 central sur une distance supérieure ou égale à 50% de la distance entre ledit longeron 5 et le tunnel 3 central ; ledit corps creux 7 étant agencé sous un des sièges avant, par exemple sous le siège conducteur.

Le corps creux 7, s'étendant sur au moins la moitié de la distance entre le longeron 5 et le tunnel 3 central est suffisamment grand pour permettre de loger l'élément technique, mais aussi d'autres éléments nécessaires à la protection de l'élément technique en cas de choc latéral de type « choc poteau ». Ainsi, des moyens de renfort structure et/ou des moyens d'absorption de choc peuvent être logés dans le corps creux 7 en même temps que l'élément technique à protéger.

Par exemple, le corps creux 7 ou au moins un corps creux 7 s'étend selon la direction transversale du véhicule entre un des longerons et le tunnel central sur une distance supérieure ou égale à 55% ou supérieur ou égale à 60% ou supérieur ou égale à 65% de la distance entre ledit longeron 5 et le tunnel 3 central. De préférence, le corps creux 7 ou au moins un corps creux 7 s'étend selon la direction transversale du véhicule entre un des longerons et le tunnel central sur une distahnce égale ou supérieure à 70% de la distance entre ledit longeron et le tunnel central ; de préférence, égale ou supérieure à 80%. De préférence encore, le corps creux ou au moins un corps creux est relié à la fois au tunnel central et à un des longerons. Dans une telle configuration on comprend que le corps creux ou au moins un corps creux s'étend selon la direction transversale du véhicule entre un des longerons et le tunnel central sur 100% de la distance entre ledit longeron et le tunnel central.

Avantageusement, le corps creux comprend deux parties, une première partie 39 dans laquelle un élément technique est logé, ledit élément technique étant une batterie de propulsion, et une deuxième partie 41 comprenant avantageusement au moins un élément d'absorption de choc, par exemple au moins une cloison interne verticale (non-visible sur les figures). Le fait de placer au moins une cloison interne verticale permet d'absorber une plus grande quantité d'énergie en cas de choc.

Avantageusement, la deuxième partie 41 est disposée à proximité du longeron 5 tandis que la première partie 39 dans laquelle l'élément technique est logé est disposée à proximité du tunnel 3 central, ce qui éloigne l'élément technique de l'endroit d'impact et favorise donc sa protection en cas de choc latéral de type « choc poteau ».

De préférence, au moins une cloison interne verticale s'étend selon la direction longitudinale du véhicule. La ou les cloisons internes verticales étant ainsi orientée selon le sens de la déformation, l'absorption d'énergie est favorisée et cela permet de réduire l'impact du choc sur les parties du véhicules situées à proximité du tunnel 3 central.

Comme le siège avant sous lequel est disposé le corps creux 7 est fixé au plancher 1 par une traverse d'assise arrière 15 au moyen de deux supports d'assise arrière (45 ; 47), à savoir un support d'assise arrière intérieur 45 agencé à proximité du tunnel 3 central et un support d'assise arrière extérieur 47 agencé à proximité du longeron 5, le corps creux 7, et en particulier la paroi supérieure du corps creux 7 formant un plancher intermédiaire 11 ou un rabat supérieur de la planche à talon 9, peut porter un ou deux supports d'assise avant (17 ; 19), à savoir un support d'assise intérieur 17 agencé à proximité du tunnel 3 central et un support d'assise extérieur 19 agencé à proximité du longeron 5. Le plancher intermédiaire 11 du corps creux 7 permet donc de supporter un des sièges avant du véhicule. Par exemple, le plancher intermédiaire 11 porte les deux supports d'assise avant (17 ; 19), ou la planche à talon les deux supports d'assise avant (17 ; 19) ou encore le plancher intermédiaire 11 porte un des supports d'assise avant et la planche à talon porte l'autre support d'assise avant. Par exemple le plancher intermédiaire 11 porte le support d'assise avant extérieur et la planche à talon 9 porte le support d'assise avant intérieur. La planche à talon 9 présente à ce titre un rabat se superposant au moins en partie au plancher intermédiaire (sur ou sous ce dernier) en vue de la fixation de la planche à talon sur le plancher intermédiaire.

De préférence, afin de régler la position du siège avant, une glissière de siège extérieure 51 relie le support d'assise arrière extérieur 47 au support d'assise avant extérieur 19 et une glissière de siège intérieure 49 relie le support d'assise arrière intérieur 45 au support d'assise avant intérieur 17.

Selon un mode de réalisation préféré, le corps creux 7 ou au moins un corps creux 7 comprend aussi une paroi avant formant une planche à talon avant 9. De préférence, la planche à talon avant 9 et le plancher intermédiaire 11 sont venus de matière de sorte à former une pièce unique.

Par ailleurs, le corps creux 7 ou au moins un corps creux 7 peut comprendre en outre une paroi arrière. Comme le siège avant sous lequel est disposé le corps creux 7 est fixé au plancher 1 par une traverse d'assise arrière 15, le corps creux 7 ou au moins un corps creux 7 peut par exemple comprendre une paroi arrière, et la paroi arrière du corps creux est disposée en avant de la traverse d'assise arrière 15 selon la direction longitudinale du véhicule. Le corps creux 7 ou au moins un corps creux 7 est donc avantageusement disposé en avant de la traverse d'assise arrière 15 selon la direction longitudinale du véhicule.

De préférence, le plancher intermédiaire 11 et ladite paroi arrière sont venues de matière. La paroi arrière du corps creux peut être fixée par son bord inférieur au plancher 1, par exemple, au moyen de points de soudure, en particulier au moyen de points de soudure électrique.

Afin de pouvoir accéder à l'élément technique logé dans le corps creux, le corps creux 7 ou au moins un corps creux 7 comprend une paroi inférieure comprenant une pièce de support 13 pour l'élément technique disposé dans ledit corps creux 7.

La paroi inférieure peut comprendre au moins deux pièces, à savoir une pièce de support 13 pour ledit élément technique disposé dans ledit corps creux, afin de pouvoir y accéder, et une pièce de fermeture 35 du plancher, principalement située au niveau de la deuxième partie 41 du plancher comprenant avantageusement au moins un moyen d'absorption de choc et/ou au moins un renfort structurel. La pièce de support 13 et la pièce de fermeture 35 du plancher sont alignées selon la direction transversale du véhicule, la pièce de support 13 étant donc agencée avantageusement du côté du tunnel 3 central et la pièce de fermeture 35 du plancher étant ainsi agencée avantageusement du côté du longeron 5.

La pièce de support 13 permet donc l'accès à l'élément technique. Elle est donc préférablement fixée par vissage au niveau du tunnel 3 central et/ou au niveau d'un brancard sous-plancher s'étendant parallèlement au longeron 5. Par ailleurs, la pièce de support 13 permet de supporter l'élément technique. Ainsi, dans le cas où une batterie 37 propulsion est logée dans le corps creux 7, la pièce de support peut aussi se visser dans le bac de batterie.

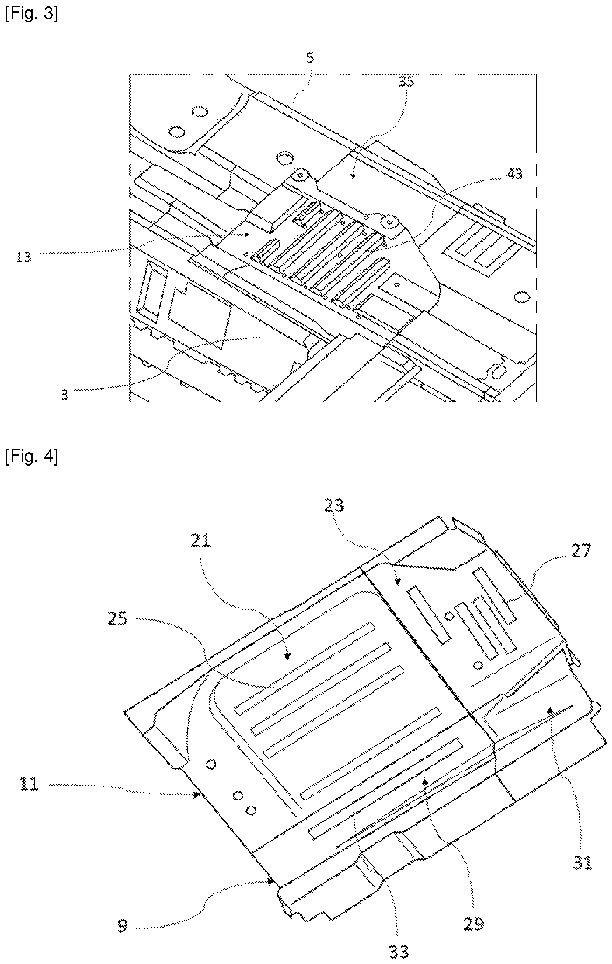

La pièce de support 13 peut avantageusement comprendre un ou plusieurs reliefs 43 de rigidification orientés transversalement, c'est-à-dire orientés selon le sens duc choc latéral. Le ou les reliefs de rigidification sont par exemple des rainures et/ou des bossages. Dans un exemple, comme montré sur la figure 3, plusieurs bossages sont orientés verticalement en direction du sol.

Par exemple, la pièce de support 13 est une pièce rigide, notamment en acier montrant un angle de pliage inférieur à 90 degrés sous une charge maximale, tel que mesuré suivant le test de flexion VDA238-100 avec une épaisseur de référence de 1,50 mm, préférentiellement inférieur ou égal à 50 degrés. Par exemple, le matériau Usibor 1500 ou le matériau 22MnB5, tous deux commercialisés par la compagnie AcerlorMittal, peuvent être utilisés.

La pièce de fermeture 35 du plancher, préférablement soudée au niveau de son côté extérieur au longeron 5 et/ou au niveau de son côté intérieur à un brancard sous-plancher s'étendant parallèlement au longeron 5, au moyen par exemple de points de soudure électrique, permet de fermer par le dessous la deuxième partie du corps creux 7 située à proximité du longeron.

Il est possible que la pièce de fermeture 35 du plancher comprenne un ou plusieurs reliefs de rigidification orientés longitudinalement (non-visible sur les figures), c'est-à-dire selon le sens de la déformation.

Par exemple, la pièce de fermeture 35 du plancher est une pièce déformable en compression, notamment en acier montrant un angle de pliage supérieur ou égal à 90 degrés sous une charge maximale, tel que mesuré suivant le test de flexion VDA238-100 avec une épaisseur de référence de 1,50 mm, préférentiellement supérieur ou égal à 120 degrés, comme par exemple le matériau Ductibor 500 commercialisé par la compagnie ArcelorMittal.

Par exemple, les deux pièces de la paroi inférieure sont disposées à des hauteurs différentes, la pièce de fermeture 35 du plancher étant disposée à une hauteur supérieure à la hauteur de la pièce de support 13, ce qui permet par exemple de loger dans le corps creux 7 une batterie 37 de propulsion avec une hauteur plus importante que la hauteur mesurée entre le niveau du plancher 1 et le niveau du plancher intermédiaire 11.

A cette fin, et pour faciliter l'accès à l'élément technique, le plancher peut comprendre une ouverture disposée au niveau du corps creux.

De manière à favoriser l'absorption d'énergie en cas de choc, et ainsi de favoriser la protection de l'élément technique logé dans le corps creux 7, il est intéressant que le plancher intermédiaire 11 montre deux zones alignées selon la direction transversale du véhicule, à savoir une première zone 21 rigide agencée du côté du tunnel 3 central et une deuxième zone 23 déformable en compression agencée du côté du longeron 5, et en ce que l'élément technique soit disposé dans le corps creux 7 et agencé pour être placé sous la première zone 21 du plancher intermédiaire.

De préférence, la première zone 21 s'étend sur plus de 50 % de la longueur du plancher intermédiaire selon la direction transversale du véhicule, par exemple sur plus de 55% ou sur plus de 60% de la longueur.

Par exemple, la première zone 21 du plancher intermédiaire comprend au moins un relief 25 de rigidification s'étendant selon la direction transversale du véhicule ; de préférence, la première zone 21 du plancher intermédiaire comprend plusieurs reliefs 25 de rigidification s'étendant selon la direction transversale du véhicule. Le ou les reliefs 25 de rigidification sont par exemple des nervures et/ou des bossages.

Par exemple, la deuxième zone 23 du plancher intermédiaire comprend au moins un relief 27 de rigidification s'étendant selon la direction longitudinale du véhicule, et recouvre avantageusement une ou plusieurs cloisons verticales qui peuvent donc être agencées dans la deuxième partie du corps creux 7. Avantageusement, la deuxième zone 23 du plancher intermédiaire comprend plusieurs reliefs 27 de rigidification s'étendant selon la direction longitudinale du véhicule. Le ou les reliefs 27 de rigidification sont par exemple des nervures et/ou des bossages.

L'effet combiné de la présence d'une ou plusieurs nervures 27 de rigidification orientées selon le sens de la déformation avec une ou plusieurs cloisons verticales, également préférablement orientées selon le sens de la déformation, permet d'absorber une partie importante de l'énergie reçu lors d'un choc latéral de type « choc poteau ».

Similairement à au plancher intermédiaire 11, la planche à talon avant 9 peut également montrer deux zones alignées selon la direction transversale du véhicule, à savoir une première zone 29 rigide agencée du côté du tunnel 3 central et une deuxième zone 31 déformable en compression agencée du côté du longeron 5, la première zone 29 montrant une rigidité supérieure à la deuxième zone 31.

De préférence, la première zone 29 s'étend sur plus de 50 % de la longueur de la planche à talon avant 9 selon la direction transversale du véhicule, par exemple sur plus de 55% ou sur plus de 60% de la longueur. Il peut également être entendu que la première zone 29 de la planche à talon avant s'étende depuis le tunnel 3 central jusqu'au niveau du support extérieur 19 d'assise porté par le corps creux 7, ou plus particulièrement, porté par le plancher intermédiaire 11.

La première 29 et la deuxième zone 31 de la planche à talon avant peuvent être constituées de matériaux différents et peuvent être reliées entre elles par raboutage, soudage ou vissage. Alternativement, la première 29 et la deuxième 31 zone de la planche à talon peuvent être venues de matière et constituées d'un même matériau, la différence de rigidité étant obtenue par une différence d'épaisseur. Ainsi, la première zone 29 peut comprendre une épaisseur supérieure à la deuxième zone 31. La première zone 29 peut comprendre aussi un ou plusieurs reliefs 33 de rigidification orienté transversalement, avantageusement un seul relief 33 de rigidification orienté transversalement. La deuxième zone 31 de la planche à talon avant peut aussi comprendre en outre au moins un ajour, avantageusement un ajour unique (non-indiqué sur les figues).

Les premières zones (21 ; 29) du plancher intermédiaire et de la planche à talon avant, disposées à proximité du tunnel 3 central, sont des pièces rigides, par exemple constituées de deux pièces en acier rapportées ou d'une seule pièce en acier, ledit acier montrant un angle de pliage inférieur à 90 degrés sous une charge maximale, tel que mesuré suivant le test de flexion VDA238-100 avec une épaisseur de référence de 1,50 mm, préférentiellement inférieur ou égal à 50 degrés. Par exemple, le matériau Usibor 1500 ou le matériau 22MnB5, tous deux commercialisés par la compagnie AcerlorMittal, peuvent être utilisés.

Les deuxièmes zones (23 ; 31) du plancher intermédiaire et de la planche à talon avant, disposées à proximité du longeron 5, sont des pièces déformables en compression, par exemple constituées de deux pièces en acier rapportées ou d'une seule pièce en acier, ledit acier montrant un angle de pliage supérieur ou égal à 90 degrés sous une charge maximale, tel que mesuré suivant le test de flexion VDA238-100 avec une épaisseur de référence de 1,50 mm, préférentiellement supérieur ou égal à 120 degrés, comme par exemple le matériau Ductibor 500 commercialisé par la compagnie ArcelorMittal.

Néanmoins, dans le cas de véhicule léger, et uniquement dans la mesure où la faible énergie de choc le permet, il est possible que le plancher intermédiaire soit uniquement constitué d'une pièce rigide, sans zone ductile côté longeron. Dans ce cas, alors, la pièce de fermeture du plancher peut aussi être une pièce rigide. Ainsi, le plancher intermédiaire, la planche à talon, la fermeture du plancher et la pièce de support peuvent, dans le cas d'un véhicule léger, être toutes les quatre des pièces en acier montrant un angle de pliage inférieur à 90 degrés sous une charge maximale, tel que mesuré suivant le test de flexion VDA238-100 avec une épaisseur de référence de 1,50 mm, préférentiellement inférieur ou égal à 50 degrés. Par exemple, le matériau Usibor 1500 ou le matériau 22MnB5, tous deux commercialisés par la compagnie AcerlorMittal, peuvent être utilisés.

Avantageusement la première zone du plancher intermédiaire et la première zone de la zone à talon ont la même longueur selon la direction transversale du véhicule.

## Revendications

1. Véhicule automobile hybride comprenant une motorisation thermique et électrique, le véhicule comprenant des sièges avant et un plancher (1) disposé sous les sièges avant, le plancher (1) comprenant un tunnel (3) central et étant relié au niveau de chacun de ses bords latéraux à un longeron (5), le véhicule comprenant en outre au moins un corps creux (7) s'étendant selon la direction transversale du véhicule entre un des longerons (5) et le tunnel (3) central sur une distance supérieure à 50% de la distance entre ledit longeron (5) et le tunnel (3) central ; ledit corps creux (7) étant agencé sous un des sièges avant, **caractérisé en ce que** le corps creux (7) ou au moins un corps creux (7) comprend une paroi avant formant une planche à talon avant (9), et
une paroi supérieure formant un plancher intermédiaire (11).

2. Véhicule selon la revendication 1, **caractérisé en ce que** le corps creux (7) ou au moins un corps creux (7) comprend une paroi inférieure comprenant une pièce de support (13) pour un élément technique disposé dans ledit corps creux (7).

3. Véhicule selon l'une des revendications précédentes, caractérisé en ce le siège avant sous lequel est disposé le corps creux est fixé au plancher (1) par une traverse d'assise arrière (15), le corps creux (7) comprend une paroi arrière, et la paroi arrière du corps creux (7) est disposée en avant de la traverse d'assise arrière (15) selon la direction longitudinale du véhicule.

4. Véhicule selon l'une des revendications précédentes, **caractérisé en ce qu'**au moins un support d'assise pour la fixation dudit siège avant est porté par ledit plancher intermédiaire (11) ; de préférence au moins un support d'assise avant (17 ; 19) est porté par ledit plancher intermédiaire (11).

5. Véhicule selon l'une des revendications précédentes, **caractérisé en ce que** le plancher intermédiaire (11) montre deux zones alignées selon la direction transversale du véhicule, à savoir une première zone (21) rigide agencée du côté du tunnel (3) central et une deuxième zone (23) déformable en compression agencée du côté du longeron (5) et **en ce qu'**un élément technique est disposé dans le corps creux (7) et agencé pour être placé sous la première zone (21) du plancher intermédiaire ; de préférence, la première zone (21) s'étend sur plus de 50 % de la longueur du plancher intermédiaire (11) selon la direction transversale du véhicule.

6. Véhicule selon la revendication 5, **caractérisé en ce que** la première zone (21) du plancher intermédiaire comprend au moins une nervure (25) de rigidification s'étendant selon la direction transversale du véhicule et/ou la deuxième zone (23) du plancher intermédiaire comprend au moins une nervure (27) de rigidification s'étendant selon la direction longitudinale du véhicule.

7. Véhicule selon l'une des revendications précédentes, **caractérisé en ce que** la planche à talon avant (9) montre deux zones alignées selon la direction transversale du véhicule, à savoir une première zone (29) rigide agencée du côté du tunnel (3) central et une deuxième zone (31) déformable en compression agencée du côté du longeron (5), la première zone (29) montrant une rigidité supérieure à la deuxième zone (31) ; de préférence, la première zone (29) s'étend sur plus de 50 % de la longueur de la planche à talon avant (9) selon la direction transversale du véhicule.

8. Véhicule selon la revendication 7, **caractérisé en ce que** la première (29) et la deuxième (31) zone de la planche à talon avant sont constituées de matériaux différents et sont reliées entre elles par raboutage, soudage ou vissage, ou **en ce que** la première (29) et la deuxième (31) zone de la planche à talon avant sont venues de matière et constituées d'un même matériau, la différence de rigidité étant obtenue par une différence d'épaisseur, la première zone (29) comprenant une épaisseur supérieure à la deuxième zone (31) et/ou par la présence au moins un relief (33) de rigidification sur la première zone (29) et/ou au moins un ajour sur la deuxième zone (31).

9. Véhicule selon l'une des revendications 1 à 8, **caractérisé en ce que** le plancher (1) comprend une ouverture disposée au niveau du corps creux (7) et **en ce que** le corps creux (7) comprend en outre une paroi inférieure ; de préférence, ladite paroi inférieure comprend au moins deux pièces, à savoir une pièce de support (13) pour un élément technique disposé dans ledit corps creux (7) et une pièce de fermeture (35) du plancher ; les deux pièces (13 ; 35) étant alignées selon la direction transversale du véhicule, la pièce de support (13) étant agencée du côté du tunnel (3) central et la pièce de fermeture (35) du plancher étant agencée du côté du longeron (5).

10. Véhicule selon l'une des revendications 1 à 9, **caractérisé en ce qu'**au moins un élément technique est logé dans le corps creux (7) et ledit élément technique ou au moins un des éléments techniques est une batterie (37) de propulsion et/ou **en ce que** le corps creux (7) comprend deux parties, une première partie (39) dans laquelle au moins un élément technique est logé, ledit élément technique ou au moins un des éléments techniques étant une batterie (37) de propulsion, et une deuxième partie (41) comprenant au moins une cloison interne verticale ; de préférence, au moins une cloison interne verticale s'étend selon la direction longitudinale du véhicule.

## Patentansprüche

1. Hybridkraftfahrzeug, das einen thermischen und elektrischen Antrieb umfasst, wobei das Fahrzeug Vordersitze und einen Boden (1) umfasst, der unter den Vordersitzen angeordnet ist, wobei der Boden (1) einen zentralen Tunnel (3) umfasst und an jeder seiner Seitenkanten mit einem Längsträger (5) verbunden ist, wobei das Fahrzeug ferner mindestens einen Hohlkörper (7) umfasst, der sich in Fahrzeugquerrichtung zwischen einem der Längsträger (5) und dem zentralen Tunnel (3) über einen Abstand von mehr als 50% des Abstands zwischen dem Längsträger (5) und dem zentralen Tunnel (3) erstreckt; wobei der Hohlkörper (7) unter einem der vorderen Sitze angeordnet ist, **dadurch gekennzeichnet, dass** der Hohlkörper (7) oder wenigstens ein Hohlkörper (7) eine vordere Wand, die ein vorderes Fersenbrett (9) bildet, und eine obere Wand, die einen Zwischenboden (11) bildet, umfasst.

2. Fahrzeug nach Anspruch 1, **dadurch gekennzeichnet, dass** der Hohlkörper (7) oder wenigstens ein Hohlkörper (7) eine Bodenwand mit einem Stützteil (13) für ein in dem Hohlkörper (7) angeordnetes technisches Element umfasst.

3. Fahrzeug nach einem der vorhergehenden Ansprüche, **dadurch gekennzeichnet, dass** der vordere Sitz, unter dem der Hohlkörper angeordnet ist, mit einem hinteren Sitzquerträger (15) am Boden (1) befestigt ist, der Hohlkörper (7) eine Rückwand umfasst und die Rückwand des Hohlkörpers (7) in Fahrzeuglängsrichtung vor dem hinteren Sitzquerträger (15) angeordnet ist.

4. Fahrzeug nach einem der vorhergehenden Ansprüche, **dadurch gekennzeichnet, dass** wenigstens eine Sitzhalterung zur Befestigung des vorderen Sitzes von dem Zwischenboden (11) getragen wird; vorzugsweise wenigstens eine vordere Sitzhalterung (17; 19) von dem Zwischenboden (11) getragen wird.

5. Fahrzeug nach einem der vorhergehenden Ansprüche, **dadurch gekennzeichnet, dass** der Zwischenboden (11) zwei in Fahrzeugquerrichtung fluchtende Bereiche aufweist, nämlich einen ersten steifen Bereich (21), der auf der Seite des mittleren Tunnels (3) angeordnet ist, und einen zweiten kompressionsverformbaren Bereich (23), der auf der Seite des Längsträgers (5) angeordnet ist, und dass im Hohlkörper (7) ein technisches Element angeordnet ist, das unter dem ersten Bereich (21) des Zwischenbodens angeordnet ist; vorzugsweise erstreckt sich der erste Bereich (21) über mehr als 50 % der Länge des Zwischenbodens (11) in Querrichtung des Fahrzeugs.

6. Fahrzeug nach Anspruch 5, **dadurch gekennzeichnet, dass** der erste Bereich (21) des Zwischenbodens mindestens eine sich in Fahrzeugquerrichtung erstreckende Versteifungsrippe (25) und/oder der zweite Bereich (23) des Zwischenbodens mindestens eine sich in Fahrzeuglängsrichtung erstreckende Versteifungsrippe (27) umfasst.

7. Fahrzeug nach einem der vorhergehenden Ansprüche, **dadurch gekennzeichnet, dass** das vordere Fersenbrett (9) zwei in Fahrzeugquerrichtung fluchtende Bereiche aufweist, nämlich einen ersten steifen Bereich (29) auf der Seite des mittleren Tunnels (3) und einen zweiten druckverformbaren Bereich (31) auf der Seite des Längsträgers (5), wobei der erste Bereich (29) eine höhere Steifigkeit als der zweite Bereich (31) aufweist; vorzugsweise erstreckt sich der erste Bereich (29) über mehr als 50 % der Länge des vorderen Fersenbretts (9) in Querrichtung des Fahrzeugs.

8. Fahrzeug nach Anspruch 7, **dadurch gekennzeichnet, dass** der erste (29) und der zweite (31) Bereich des vorderen Fersenbretts aus unterschiedlichen Materialien bestehen und durch Hobeln, Schweißen oder Schrauben miteinander verbunden sind, oder dass der erste (29) und der zweite (31) Bereich des vorderen Fersenbretts aus einem Material bestehen und aus demselben Material bestehen, wobei die Steifigkeitsdifferenz durch eine Dickendifferenz erhalten wird, wobei der erste Bereich (29) eine Dicke aufweist, die größer ist als der zweite Bereich (31) und/oder durch das Vorhandensein Mindestens eine Versteifungsrelief (33) auf dem ersten Bereich (29) und/oder mindestens eine Durchbrechung auf dem zweiten Bereich (31).

9. Fahrzeug nach einem der Ansprüche 1 bis 8, **dadurch gekennzeichnet, dass** der Boden (1) eine Öffnung aufweist, die im Bereich des Hohlkörpers (7) angeordnet ist, und dass der Hohlkörper (7) ferner eine Bodenwand aufweist; wobei vorzugsweise die Bodenwand wenigstens zwei Teile aufweist, nämlich ein Stützteil (13) für ein in dem Hohlkörper (7) angeordnetes technisches Element und ein Verschlussteil (35) für den Boden; wobei die beiden Teile (13; 35) in der Querrichtung des Fahrzeugs ausgerichtet sind, wobei das Stützteil (13) tunnelseitig angeordnet ist (3) zentral angeordnet ist und das Bodendeckelteil (35) auf der Seite des Holms (5) angeordnet ist.

10. Fahrzeug nach einem der Ansprüche 1 bis 9, **dadurch gekennzeichnet, dass** mindestens ein technisches Element in dem Hohlkörper (7) untergebracht ist und das technische Element oder mindestens eines der technischen Elemente eine Antriebsbatterie (37) ist und/oder dass der Hohlkörper (7) zwei Teile umfasst, einen ersten Teil (39), in dem mindestens ein technisches Element untergebracht ist, wobei das technische Element oder mindestens eines der technischen Elemente eine Antriebsbatterie (37) ist, und einen zweiten Teil (41), der mindestens eine vertikale innere Trennwand umfasst; vorzugsweise mindestens eine innere Trennwand Vertikal in Längsrichtung des Fahrzeugs verläuft.

## Claims

1. Hybrid motor vehicle comprising a thermal and electric motor, the vehicle comprising front seats and a floor (1) arranged under the front seats, the floor (1) comprising a centre tunnel (3) and being connected to the level of each of its lateral edges to a side member (5), the vehicle further comprising at least one hollow body (7) extending along the transverse management of the vehicle between one of the side members (5) and the centre tunnel (3) over a distance greater than 50% of the distance between said side member (5) and the centre tunnel (3); said hollow body (7) being arranged under one of the front seats, wherein the hollow body (7) or at least one hollow body (7) comprises a front wall forming a front heel board (9), and an upper wall forming an intermediate floor (11).

2. Vehicle according to claim 1, wherein the hollow body (7) or at least one hollow body (7) comprises a lower wall comprising a support component (13) for a technical item arranged in said hollow body (7).

3. Vehicle according to one of the previous claims, wherein the front seat under which the hollow body is arranged is fixed to the floor (1) by a rear seat cross-member (15), the hollow body (7) comprises a rear wall, and the rear wall of the hollow body (7) is arranged in front of the rear seat cross-member (15) along the longitudinal management of the vehicle.

4. Vehicle according to one of the previous claims, **characterised in that** at least one seat support for fixing said front seat is carried by said intermediate floor (11); preferably at least one front seat support (17; 19) is carried by said intermediate floor (11).

5. Vehicle according to one of the previous claims, **characterised in that** the intermediate floor (11) shows two zones aligned along the transverse management of the vehicle, namely a first rigid zone (21) arranged on the side of the central tunnel (3) and a second zone (23) deformable in compression arranged on the side of the spar (5) and **in that** a technical item is arranged in the hollow body (7) and arranged to be placed under the first zone (21) of the intermediate floor; preferably, the first zone (21) extends over more than 50% of the length of the intermediate floor (11) along the transverse management of the vehicle.

6. Vehicle according to claim 5, wherein the first zone (21) of the intermediate floor comprises at least one stiffening rib (25) extending along the transverse management of the vehicle and/or the second zone (23) of the intermediate floor comprises at least one stiffening rib (27) extending along the longitudinal management of the vehicle.

7. Vehicle according to one of the previous claims, **characterised in that** the front heel board (9) shows two zones aligned along the transverse management of the vehicle, namely a first rigid zone (29) arranged on the side of the centre tunnel (3) and a second zone (31) deformable in compression arranged on the side of the spar (5), the first zone (29) showing a stiffness greater than the second zone (31); preferably, the first zone (29) extends over more than 50% of the length of the front heel board (9) along the transverse management of the vehicle.

8. Vehicle according to Claim 7, **characterised in that** the first (29) and second (31) zones of the front heel board are made of different materials and are joined together by butt-jointing, welding or screwing, or **in that** the first (29) and second (31) zones of the front heel board are made of the same material, the difference in rigidity being obtained by a difference in thickness, the first zone (29) comprising a thickness greater than the second zone (31) and/or by the presence of at least one stiffening relief (33) on the first zone (29) and/or at least one opening on the second zone (31).

9. Vehicle according to one of Claims 1 to 8, **characterised in that** the floor (1) comprises an opening arranged at the level of the hollow body (7) and **in that** the hollow body (7) further comprises a lower wall; preferably, said lower wall comprises at least two components, namely a support component (13) for a technical item arranged in said hollow body (7) and a floor closing component (35); the two components (13; 35) being aligned along the transverse management of the vehicle, the support component (13) being arranged on the side of the central tunnel (3) and the floor closing component (35) being arranged on the side of the spar (5).

10. Vehicle according to one of Claims 1 to 9, wherein at least one technical item is housed in the hollow body (7) and said technical item or at least one of the technical items is a propulsion battery (37) and/or wherein the hollow body (7) comprises two parts, a first part (39) in which at least one technical item is housed, said technical item or at least one of the technical items being a propulsion battery (37), and a second part (41) comprising at least one vertical internal partition; preferably, at least one vertical internal partition extends along the longitudinal management of the vehicle.
